(19) Europäisches Patentamt
European Patent Office
Office européen des brevets

(11) **EP 3 136 083 B1**

(12) **EUROPÄISCHE PATENTSCHRIFT**

(45) Veröffentlichungstag und Bekanntmachung des Hinweises auf die Patenterteilung:
**06.06.2018 Patentblatt 2018/23**

(51) Int Cl.:
**G01N 21/17** *(2006.01)*      **G01N 21/27** *(2006.01)*
**G01N 21/3577** *(2014.01)*   *G01N 21/03* *(2006.01)*
**G01N 21/11** *(2006.01)*

(21) Anmeldenummer: **15191297.9**

(22) Anmeldetag: **23.10.2015**

(54) **VERFAHREN UND VORRICHTUNG ZUR BESTIMMUNG EINER STOFFKONZENTRATION ODER EINES STOFFES IN EINEM FLÜSSIGEN MEDIUM**

METHOD AND DEVICE FOR DETERMINING A SUBSTANCE OR THE CONCENTRATION OF A SUBSTANCE IN A FLUID MEDIUM

PROCEDE ET DISPOSITIF DE DETERMINATION D'UNE MATIERE OU D'UNE CONCENTRATION DE MATIERE DANS UN MILIEU LIQUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.08.2015 EP 15182702**

(43) Veröffentlichungstag der Anmeldung:
**01.03.2017 Patentblatt 2017/09**

(73) Patentinhaber: **Swan Analytische Instrumente AG 8340 Hinwil (CH)**

(72) Erfinder: **WAGNER, Heinz 8053 Zürich (CH)**

(74) Vertreter: **Troesch Scheidegger Werner AG Schwäntenmos 14 8126 Zumikon (CH)**

(56) Entgegenhaltungen:
**GB-A- 2 431 715        US-A1- 2003 107 738 US-A1- 2013 293 894**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Bestimmung mindestens einer Stoffkonzentration oder mindestens eines Stoffes in einem flüssigen Medium sowie eine Vorrichtung hierzu nach dem Oberbegriff von Anspruch 10.

Spektroskopische Analyse ist ein weites Feld, in dem die Zusammensetzung und die Eigenschaften eines Materials in einer beliebigen Phase - Gas, Flüssigkeit, Feststoff - von den elektromagnetischen Spektren, die sich aus der Interaktion (z. B. Absorption, Lumineszenz oder Emission) mit Energie bestimmt.

Ein Anwendungsgebiet, insbesondere als Absorptionsspektroskopie bekannt, umfasst das Messen von optischen Absorptionsspektren von flüssigen Substanzen. Ein Absorptionsspektrum ist die Verteilung der Lichtdämpfung (durch Absorption) in Funktion der Lichtwellenlänge. Der prinzipielle Aufbau eines Spektrophotometers besteht darin, dass die zu untersuchende Substanz in einem transparenten Gefäss - auch etwa als Küvette oder Probenzellen bezeichnet - gegeben wird. Elektromagnetische Strahlen (Licht) einer bekannten Wellenlänge $\lambda$ (z. B. im ultravioletten, infraroten, sichtbaren, etc. Bereich) und der Intensität I wird in das Gefäss eingekoppelt. Eine Messeinheit oder ein Detektor, der die Intensität des austretenden Lichts misst, wird auf der gegenüberliegenden Seite des Gefässes angeordnet. Dabei wird die Länge, welche das Licht in der Probe zurücklegt, als Weglänge oder Abstand d bezeichnet.

Bei den meisten Spektralphotometern werden standardisierte Küvetten eingesetzt, die eine Weglänge von 1cm und ein Fassungsvermögen von 50 bis 2000 $\mu$l aufweisen.

Für eine Probe, die aus einer einzigen homogenen Substanz mit einer Konzentration c besteht, gilt für das durch die Probe übertragene Licht das Gesetz von Lambert, Beer und Bouguer:

$$A = \log\left(\frac{\Phi_0}{\Phi_{tr}}\right) = \varepsilon \cdot c \cdot d$$

Dabei ist A die Extinktion (oder Absorption, $\Phi_{tr}$ die Intensität nach der Transmission, $\Phi_0$ die Anfangsintensität, $\varepsilon$ der Extinktionskoeffizient (der in der Regel bei einer vorgegebenen Wellenlänge $\lambda$ konstant ist), c die Konzentration und d die Weglänge. Für weitere Angaben zu den Grundlagen der Spektrophotometrie und den hierbei verwendeten Begriffen und Definitionen wird auf die Norm DIN 38404-3 (Fassung vom Juli 2005) verwiesen.

Sind mehrere Substanzen in der Probe enthalten, ergibt sich eine Gesamtabsorption Atot wie folgt:

$$A_{tot} = \left(\sum_j \varepsilon_j(\lambda) \cdot c_j\right) \cdot d$$

Die vorstehend kurz erläuterten Gesetzmässigkeiten werden insbesondere auch bei der Überwachung der Wasserqualität, die fortlaufend wiederholt vorgenommen wird. Wie in DIN 38404-3 beschrieben, erfolgt die Bestimmung bei einer Wellenlänge $\lambda$=254nm, allenfalls auch zusätzlich bei $\lambda$=550nm.

Es hat sich bei bekannten Vorrichtungen gezeigt, dass bei einem so genannten online-Monitoring, bei dem eine laufende und wiederholte Bestimmung der Wasserqualität mit dem gleichen Messinstrument erfolgt, infolge einer Verschmutzung der Küvetten-Fenster, durch das die elektromagnetischen Wellen eingekoppelt werden, ein Drift des Instrumenten-Nullpunktes resultiert, wodurch Messfehler entstehen. Zwar kann in regelmässigen Abständen der Nullpunkt neu bestimmt werden, indem eine Kalibrierflüssigkeit (z. B. optisch reinem Wasser gemäss DIN ISO 3696, 7.4) mit bekannter Absorption für eine Messung verwendet wird.

Eine andere Möglichkeit, dem Problem der Verunreinigung zu begegnen, besteht darin, ein so genanntes 2-Strahl-Photometer zu verwenden, bei dem neben dem Messkanal ein Referenzkanal, vorzugsweise mit optisch reines Wasser, eingesetzt wird, wobei angenommen wird, dass beide Kanäle gleich verschmutzt werden und damit der Drift gleich ist. Diesbezüglich wird auf einen Aufsatz mit dem Titel "Drinking Water and Open Waters Application Sheet, V 2.0" (S::can Messtechnik GmbH, Vienna, Seite 5, Kapitel 4 unter "Long-term stability") verwiesen.

Schliesslich ist auch eine mechanische Reinigung der Küvetten-Fenster mit einem Wischer oder mit Druckluft vorgeschlagen worden. Diesbezüglich wird ebenfalls auf den vorstehend genannten Aufsatz verwiesen, und zwar auf Seite 5, Kapitel 3, unter "Lower crosssensivity on turbidity, coloration, window deposit, etc." und auf den Aufsatz mit dem Titel "UVAS plus sc - Die kontinuierliche Bestimmung der organischen Abwasserbelastung" (Seite 2, Kapitel "Messprinzip", Hach Lange GmbH) verwiesen.

Die bekannten Instrumente haben den Nachteil, dass die Effizienz der Reinigung entweder nicht oder nur schwierig abgeschätzt werden kann oder dass eine Kalibrierung zu Unterbrüchen im Monitoring führen. Allen bekannten Verfahren ist gemeinsam, dass sie relativ kompliziert und daher aufwendig zu realisieren sind.

Es ist daher Aufgabe der vorliegenden Erfindung, ein Verfahren anzugeben, das zumindest einen der vorerwähnten Nachteile nicht aufweist.

Das in Anspruch 1 beanspruchte Verfahren löst die vorstehend genannte Aufgabe. Weitere Ausführungsvarianten sowie eine Vorrichtung sind in weiteren Ansprüchen angegeben.

Die vorliegende Erfindung bezieht sich zunächst auf ein Verfahren zur Bestimmung mindestens einer Stoffkonzentration oder mindestens eines Stoffes in einem flüssigen Medium, wobei das Verfahren darin besteht,

- dass flüssiges Medium mit einer vorgegebenen Fliessgeschwindigkeit in ein Gefäss mit bekannter Form eingebracht wird,
- dass elektromagnetische Wellen mit vorgegebener Wellenlänge bzw. mit vorgegebenem Wellenlängenbereich in das im Gefäss enthaltene flüssige Medium eingekoppelt wird, wobei die elektromagnetischen Wellen im flüssigen Medium eine Wegstrecke zurücklegen, die von einem Füllstand des flüssigen Medium im Gefäss abhängig ist,
- dass Intensitäten der elektromagnetischen Wellen nach Zurücklegung der Wegstrecke im flüssigen Medium zu mindestens zwei vorgegebenen Zeitpunkten bzw. bei mindestens zwei vorgegebenen Füllständen des Gefässes gemessen werden, und
- dass nach einer letzten Intensitätsmessung die mindestens eine Stoffkonzentration bzw. der mindestens eine Stoff unter Verwendung der gemessenen Intensitäten und der mindestens zwei vorgegebenen Zeitpunkte bzw. der mindestens zwei vorgegebenen Füllstände bestimmt wird.

Indem mindestens zwei Intensitätsmessungen bei unterschiedlichen Füllständen von flüssigem Medium im Gefäss vorgenommen werden, hat ein möglicher Nullpunkt-Drift, der beispielsweise durch Verschmutzung des Gefässes entstehen kann, keinen Einfluss auf die Genauigkeit der erhaltenen Konzentration. Eine Reinigung des Gefässes oder eine Kalibrierung mittels eines separaten Messkanals bzw. eine Messung mit optisch reinem Wasser kann vollständig entfallen. Damit ist ein überaus robustes und störresistentes Messinstrument erhalten worden.

Eine Ausführungsvariante des erfinderischen Verfahrens umfasst die weiteren Schritte,

- dass n Intensitäten bei n Füllständen gemessen werden, wobei die n Füllstände vorzugsweise äquidistant gewählt werden, und
- dass Stoffkonzentrationen nach folgender Formel bestimmt werden:

$$c_i = \frac{\ln \Phi_i(x_i) - \ln \Phi_{i-1}(x_{i-1})}{-2.302 * \varepsilon * (x_i - x_{i-1})}$$

wobei $c_i$ die i-te Stoffkonzentration, $x_i$ der i-te Füllstand, $\Phi_i(x_i)$ eine gemessene i-te Intensität bei einem Füllstand $x_i$, i der Index, der ganzzahlig von 1 bis n läuft, und $\varepsilon$ der Extinktionskoeffizient ist, und wobei n einen Wert im Bereich von 1 bis einige 100, vorzugsweise einen Wert im Bereich von 10 bis 100, aufweist.

Weitere Ausführungsvarianten des erfinderischen Verfahrens umfassen die weiteren Schritte,

- dass ein erster Füllstand detektiert wird, bei dem eine erste Intensität gemessen wird,
- dass ein letzter Füllstand detektiert wird, bei dem eine letzte Intensität gemessen wird,

wobei die Detektion des ersten Füllstandes und/oder des letzten Füllstandes vorzugsweise mit einer Lichtschranke erfolgt.

Weitere Ausführungsvarianten des erfinderischen Verfahrens umfassen den Schritt, dass die Stoffkonzentration c entweder durch Mittelwertbildung aus den n Stoffkonzentrationen $c_i$ mit i=0...n oder mittels linearer Regression, insbesondere mittels einfacher linearer Regression, berechnet wird.

Bei weiteren Ausführungsvarianten des erfinderischen Verfahrens ist die Fliessgeschwindigkeit des flüssigen Mediums konstant.

Bei weiteren Ausführungsvarianten des erfinderischen Verfahrens ist das Gefäss eine Küvette, deren Längsachse im Wesentlichen vertikal verläuft und eine konstante Querschnittsfläche aufweist, wobei die elektromagnetischen Wellen vorzugsweise von unten in die Küvette eingekoppelt werden und die Intensität vorzugsweise oberhalb der Küvette gemessen wird.

Weitere Ausführungsvarianten des erfinderischen Verfahrens umfassen die weiteren Schritte,

- das Gefäss nach der letzten Intensitätsmessung automatisch entleert wird und

- dass nach erfolgter Entleerung das Gefäss für einen neuen Messzyklus automatisch mit neuem flüssigem Medium gefüllt wird.

Weitere Ausführungsvarianten des erfinderischen Verfahrens umfassen den Schritt, dass die Füllstände über eine Zeitmessung ermittelt werden.

Weitere Ausführungsvarianten des erfindungsgemässen Verfahrens umfassen den Schritt, dass die Füllstände über die Absorption eines Lösungsmittels ermittelt werden, bei einer Wellenlänge, wo nur das Lösungsmittel und nicht die gelösten Stoffe absorbieren.

Bei weiteren Ausführungsvarianten des erfindungsgemässen Verfahrens weisen die elektromagnetischen Wellen eine Wellenlänge von 254nm oder 550nm auf.

Ferner bezieht sich die Erfindung auf eine Vorrichtung zur Bestimmung einer Stoffkonzentration bzw. mindestens eines Stoffes in einem flüssigen Medium, wobei die Vorrichtung umfasst:

- ein Gefäss mit bekannter Form,
- eine Quelle zur Erzeugung von elektromagnetischen Wellen,

- eine Messeinheit zur Messung von elektromagnetischen Wellen und
- eine Fördereinrichtung, die über einen Verbindungskanal mit dem Gefäss verbunden ist,
- dass die Quelle elektromagnetische Wellen in das Gefäss abgeben kann, so dass die elektromagnetischen Wellen im flüssigen Medium eine Wegstrecke zurücklegen, die von einem Füllstand des flüssigen Mediums im Gefäss abhängig ist,- dass Intensitäten der elektromagnetischen Wellen nach Zurücklegung der Wegstrecke im flüssigen Medium zu mindestens zwei vorgegebenen Zeitpunkten bzw. bei mindestens zwei vorgegebenen Füllständen des Gefässes mit der Messeinheit messbar sind und
- dass eine Recheneinheit mit der Quelle, der Messeinheit und

der Fördereinrichtung operationell verbunden ist, wobei die Recheneinheit zur Bestimmung der mindestens einen Stoffkonzentration bzw. des mindestens einen Stoffes aufgrund der gemessenen Intensitäten und der mindestens zwei vorgegebenen Zeitpunkte bzw. der mindestens zwei

vorgegebenen Füllstände ausgelegt ist. Eine Ausführungsvariante der erfindungsgemässen Vorrichtung zeichnet sich dadurch aus,

- dass die Messeinheit dazu ausgelegt ist, n Intensitäten bei n Füllständen zu messen, wobei die n Füllstände vorzugsweise äquidistant gewählt werden, und
- dass die Recheneinheit dazu ausgelegt ist, Stoffkonzentrationen nach folgender Formel zu bestimmen :

$$c_i = \frac{\ln \Phi_i(x_i) - \ln \Phi_{i-1}(x_{i-1})}{-2.302 * \varepsilon * (x_i - x_{i-1})}$$

wobei $c_i$ die i-te Stoffkonzentration, $x_i$ der i-te Füllstand, $\Phi_i(x_i)$ eine gemessene i-te Intensität bei einem Füllstand $x_i$, i der Index, der ganzzahlig von 1 bis n läuft, und $\varepsilon$ der Extinktionskoeffizient ist, und wobei n einen Wert im Bereich 1 bis einige 100, vorzugsweise einen Wert im Bereich von 10 bis 100, aufweist. Gemäß weiteren Ausführungsvarianten ist die erfindungsgemässe Vorrichtung dazu ausgelegt,

- einen ersten Füllstand zu detektieren und dabei eine erste Intensität zu messen,
- einen letzten Füllstand zu detektieren und dabei eine letzte Intensität zu messen, wobei zur Detektion des ersten Füllstandes und/oder des letzten Füllstandes vorzugsweise eine erste Lichtschranke resp. eine zweite Lichtschranke vorhanden ist.

Weitere Ausführungsvarianten der erfindungsgemässen Vorrichtung bestehen darin, dass die Recheneinheit dazu ausgelegt ist, die Stoffkonzentration c in der Recheneinheit entweder durch Mittelwertbildung aus den n Stoffkonzentrationen $c_i$ mit i=l...n oder mittels linearer Regression, insbesondere mittels einfacher linearer Regression, zu berechnen.

Weitere Ausführungsvarianten der erfindungsgemässen Vorrichtung bestehen darin, dass eine Fördervorrichtung vorgesehen ist, die mit dem Verbindungskanal wirkverbunden ist, wobei die Fördereinrichtung dazu ausgelegt ist, das flüssige Medium vorzugsweise mit konstanter Fliessgeschwindigkeit in das Gefäss zu fördern.

Weitere Ausführungsvarianten der erfindungsgemässen Vorrichtung bestehen darin, dass die Fördereinrichtung zum Befüllen und zum Entleeren des Gefässes ein automatisch betätigbares Umschaltventil umfasst.

Noch weitere Ausführungsvarianten der erfindungsgemässen Vorrichtung bestehen darin, dass das Gefäss eine Küvette ist, deren Längsachse im Wesentlichen vertikal verläuft und eine konstante Querschnittsfläche aufweist, wobei die elektromagnetischen Wellen vorzugsweise von unten in die Küvette eingekoppelt werden und die Intensität vorzugsweise oberhalb der Küvette gemessen wird.

Weitere Ausführungsvarianten der erfindungsgemässen Vorrichtung bestehen darin, dass das Gefäss umgekehrt im Sinne einer Tauchsonde angeordnet ist, wobei ein Füllstand im Gefäss mittels Luftverdrängung einstellbar ist.

Weitere Ausführungsvarianten der erfindungsgemässen Vorrichtung bestehen darin, dass die Quelle dazu ausgelegt ist, elektromagnetische Wellen mit Wellenlängen von 254nm und 550nm zu erzeugen. Weitere Ausführungsvarianten der erfindungsgemässen Vorrichtung bestehen darin, dass mit dem Gefäss ein Schaurohr kommunizierend verbunden ist, über das mindestens der erste Füllstand und der letzte Füllstand bestimmbar sind.

Es wird ausdrücklich darauf hingewiesen, dass die vorstehenden Ausführungsvarianten in beliebiger Weise kombinierbar sind. Lediglich diejenigen Kombinationen von Ausführungsvarianten sind ausgeschlossen, die durch Kombination zu einem Widerspruch führen würden.

Ausführungsbeispiele der vorliegenden Erfindung werden nachstehend anhand von Figuren noch näher erläutert. Es zeigen:

Fig. 1    eine erste Ausführungsvarianten einer erfindungsgemässen Vorrichtung,

Fig. 2    eine zweite Ausführungsvariante einer erfindungsgemässen Vorrichtung,

Fig. 3    eine dritte Ausführungsvariante einer erfindungsgemässen Vorrichtung,

Fig. 4    eine vierte Ausführungsvariante einer erfindungsgemässen Vorrichtung und

Fig. 5    ein Flussdiagramm mit einzelnen Verfahrensschritten des erfindungsgemässen Verfahrens.

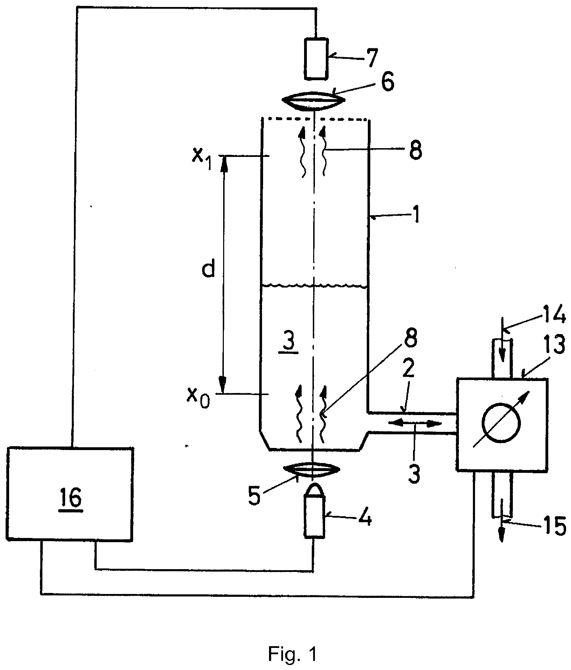

In Fig. 1 ist eine erste Ausführungsvariante der erfinderischen Vorrichtung schematisch dargestellt. Ein Gefäss 1 mit bekannter Form wird mit einem zu untersuchenden flüssigem Medium 3 über einen Verbindungskanal 2 gefüllt, der das Gefäss 1 mit einer Fördereinrichtung 13 verbindet. Die Fördereinrichtung 13 kann in beliebiger Weise realisiert werden, erfüllt jedoch die folgenden Funktionen:

- Erzeugung einer vorbestimmten Fliessgeschwindigkeit für das in das Gefäss 1 einströmende flüssige Medium 3, wobei die Fliessgeschwindigkeit in einer Ausführungsvariante der Erfindung konstant ist.
- Möglichkeit nach einer noch zu erläuternden Messung das Gefäss 1 wiederum entleeren zu können.

Die erwähnten Funktionen müssen nicht zwingend in einer Einheit - der Fördereinrichtung 13 gemäss Fig. 1 - sondern können auch in mehreren Einheiten realisiert sein.

Die vorbestimmte Fliessgeschwindigkeit wird beispielsweise mit einer Dosierpumpe (z.B. in der Form einer Verdrängungspumpe, insbesondere einer Zahnradpumpe) oder mit einem Gefäss mit konstantem Probenpegel (Constant Head) und mit einer Kapillare als Probenauslauf in die Küvette erzeugt.

Eine Quelle 4 zur Erzeugung von elektromagnetischen Wellen 8 (Licht) wird beispielsweise unterhalb des Gefässes 1 angeordnet, so dass die elektromagnetischen Wellen 8 in das Gefäss 1 derart eingekoppelt werden können, dass eine von diesen elektromagnetischen Wellen zurückgelegte Weglänge von einem Füllstand von flüssigem Medium 3 im Gefäss 1 abhängig ist. Entsprechend laufen die elektromagnetischen Wellen 8 von unten (wie in Fig. 1 dargestellt) oder von oben durch das im Gefäss 1 enthaltene flüssige Medium 3 bis die verbleibende Intensität der durch die Quelle 4 ausgesendeten elektromagnetischen Wellen 8 durch eine Messeinheit 7 gemessen wird. Entsprechend ist die Messeinheit 7 im Strahlenverlauf der durch die Quelle 4 ausgesendeten elektromagnetischen Wellen 8 gegenüberliegend zur Quelle 7 angeordnet, so dass die Messeinheit 7 die Intensität der elektromagnetischen Wellen 8 nach dem Durchdringen des im Gefäss 1 enthaltenen flüssigen Medium 3 ermitteln kann.

Für eine Bündelung der von der Quelle 4 ausgesendeten elektromagnetischen Wellen 8 und für eine Konzentrierung der elektromagnetischen Wellen nach dem Durchdringen des im Gefäss 1 enthaltenen flüssigen Mediums 3 können Linsen bzw. Linsensysteme 5 und 6 vorgesehen sein. Damit wird die Effizienz durch bessere Lichtausbeute erhöht.

Die Quelle 4, die Messeinheit 7 und die Fördereinrichtung 13 sind mit einer Recheneinheit 16 operationell verbunden, wodurch eine Steuerung der erfindungsgemässen Vorrichtung gemäss einem noch zu erläuternden Ablauf erfolgen kann.

Das Gefäss 1 kann - wie in Fig. 1 ersichtlich - beispielsweise eine Küvette sein, die zumindest im Bodenbereich ein transparentes Fenster aufweist, durch das die elektromagnetischen Wellen der Quelle 4 in das flüssige Medium 3 gelangen kann.

Die von der Quelle 4 ausgesendeten elektromagnetischen Wellen 8 weisen beispielsweise eine Wellenlänge $\lambda$ von 254nm oder von 550nm in Anlehnung an die bereits erwähnte Norm DIN 38404-3 (Juli 2005) auf. In Abhängigkeit eines Absorptionsmaximum, das von den zu detektierenden Inhaltstoffen abhängig ist, kann die Wellenlänge beliebig gewählt werden. Entsprechend sind durchaus andere Wellenlängen als die vorstehend erwähnten denkbar.

Insbesondere ist auch denkbar, dass - wie oben angedeutet - die durch die Quelle 4 ausgesendeten elektromagnetischen Wellen 8 ein vorgegebenes Spektrum, mithin einen vorgegebenen Wellenlängenbereich abdecken und nicht nur eine oder allenfalls zwei Wellenlängen, wie dies gemäss DIN 38404-3 vorgesehen ist. Gleichzeitig muss die Messeinheit 7 so ausgestaltet sein, dass Intensitäten bei mehreren Frequenzen, mithin ebenfalls in einem vorgegebenen Spektrum bzw. Wellenlängenbereich, ermittelt bzw. gemessen werden können. Damit ist die Möglichkeit geschaffen, im Sinne der bekannten Methode bzw. Vorrichtung gemäss EP-0 600 334 B1 vorhandene Substanzen und deren Anteile im flüssigen Medium 3 bestimmen zu können. Der EP-0 600 334 B1 entsprechend sind eine Reihe von Messkanälen vorgesehen, deren Resultate in der Recheneinheit 16 entsprechend verarbeitet werden.

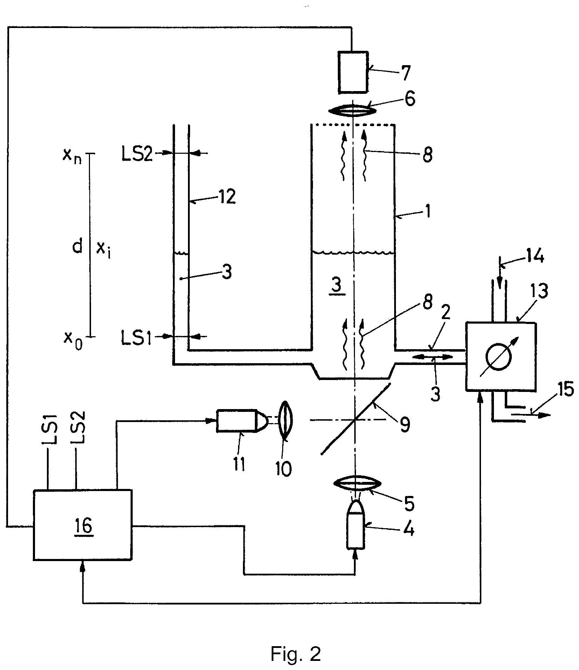

Fig. 2 zeigt eine weitere Ausführungsform der erfindungsgemässen Vorrichtung zur Bestimmung mindestens einer Stoffkonzentration oder mindestens eines Stoffes in einem flüssigen Medium 3. Erkennbar sind wiederum die bereits bei der in Fig. 1 dargestellten und mit den gleichen Hinweiszeichen wie dort versehenen Komponenten. Es sind dies das Gefäss 1, der Verbindungskanal 2, die Fördereinrichtung 13, die Quelle 4 für elektromagnetische Wellen 8, die Messeinheit 7, die Recheneinheit 16 und die Linsen bzw. Linsensysteme 5 bzw. 6 nach der Quelle 4 bzw. vor der Messeinheit 7.

Bei der in Fig. 2 dargestellten Ausführungsvariante ist zusätzlich ein Schaurohr 12 vorgesehen, das mit dem Gefäss 1 über einen weiteren Verbindungskanal verbunden ist, so dass der Füllstand im Schaurohr 12 mit demjenigen im Gefäss 1 übereinstimmt. Damit ist die Möglichkeit gegeben, dass der Füllstand, beispielsweise mit Lichtschranken LS1 und LS2, am Ort der Lichtschranken LS1, LS2 ermittelt werden kann.

Ferner ist im Bereich der Quelle 4 eine teildurchlässige Transmissionseinheit 9 (beispielsweise in Form eines teildurchlässigen Spiegels) vorgesehen, welche die elektromagnetischen Wellen der Quelle 4 in Richtung Messeinheit 7 durchlässt, aber auch die von einer weiteren Quelle 11 erzeugten elektromagnetischen Wellen in Richtung Messeinheit 7 ablenken. Mithin können die Quellen 4 und 11 elektromagnetische Wellen mit unterschiedlichen Wellenlängen $\lambda$ erzeugen und diese gleich-

zeitig oder zeitlich gestaffelt in das flüssige Medium 3 im Gefäss 1 einkoppeln. In Anlehnung an die Forderung der Norm DIN 38404-3 (Version Juli 2015) kann beispielsweise die Quelle 4 elektromagnetische Wellen mit einer Wellenlänge $\lambda$ von 254nm und die Quelle 11 elektromagnetische Wellen mit einer Wellenlänge $\lambda$ von 550nm erzeugen. Damit wird ein kompaktes Instrument erhalten, das ein gezieltes Messen der Restintensitäten bei zwei unterschiedlichen Wellenlängen $\lambda$ ermöglicht.

Wie bereits bei der Quelle 4 ist auch bei der weiteren Quelle 11 eine Linse bzw. ein Linsensystem 10 nachgeschaltet, damit eine maximale Lichtausbeute bei einem Messvorgang erzielt werden kann. Ferner ist die weitere Quelle 11 zur Ansteuerung ebenfalls mit der Recheneinheit 16 wirkverbunden. Das Gleiche gilt für die Lichtschranken LS1 und LS2, deren Detektionssignal ebenfalls der Recheneinheit 16 zur Weiterverarbeitung zugeführt wird.

Selbstverständlich ist auch bei dieser Ausführungsform denkbar, dass die Quellen 4 und 11 einen vorgegebenen Wellenlängenbereich im Sinne der EP-0 600 334 B1 abgeben können, um die im flüssigen Medium 3 vorhanden Substanzen bzw. Substanzen-Konzentrationen - wiederum gemäss der Lehre nach EP-0 600334 B1 - ermitteln zu können.

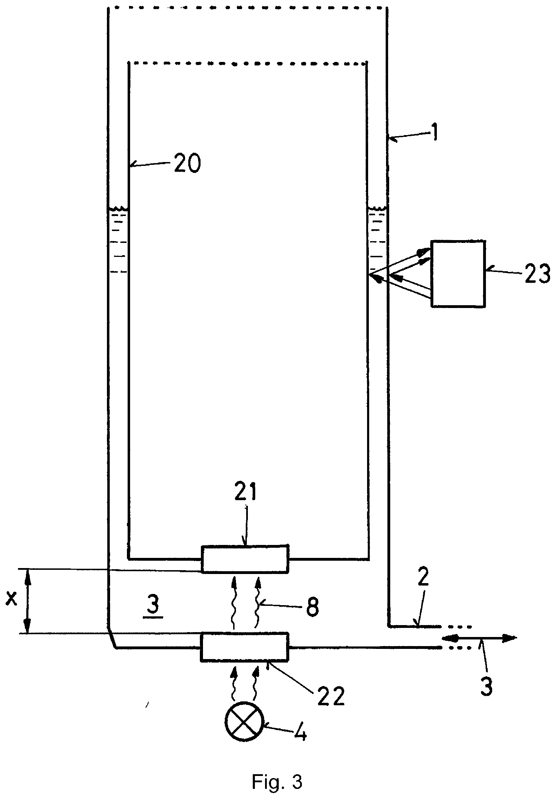

Fig. 3 zeigt eine weitere Ausführungsvariante der erfindungsgemässen Vorrichtung, wobei in der Fig. 3 wiederum das Gefäss 1, der Verbindungskanal 2 und die Quelle 4 dargestellt sind. Zusätzlich zu den in den Fig. 1 und 2 dargestellten Ausführungsvarianten umfasst die in Fig. 3 gezeigte Ausführungsvariante im Gefäss 1 ein Behältnis 20, das in dessen Bodenbereich ein Austrittfenster 21 für die elektromagnetischen Wellen 8 enthält. Das Austrittfenster 21 liegt gegenüber einem im Gefäss 1 eingelassenen Eintrittsfenster 22, durch das die in der Quelle 4 erzeugten elektromagnetischen Wellen 8 in das flüssige Medium 3 eingekoppelt werden. Denkbar ist auch, dass die Quelle 4 nicht wie in Fig. 3 gezeigt unterhalb des Gefässes 1 angeordnet ist sondern im Behältnis 20 und damit oberhalb des Fensters 21. Entsprechend wäre dann die Messeinheit (in Fig. 3 nicht dargestellt) unterhalb des Fensters 22 angeordnet.

Die in Fig. 3 gezeigte Ausführungsvariante der vorliegenden Erfindung eignet sich insbesondere dann, wenn aufgrund von hochabsorbierenden Stoffen im flüssigen Medium 3 lediglich relativ kleine Distanzen x bzw. Distanzänderungen zwischen dem Eintrittsfenster 22 und dem Austrittsfenster 21 möglich sind. Dies ist beispielsweise bei Nitrat-haltigen flüssigen Medien der Fall. Damit kann das Zuführen bzw. Abführen von flüssigem Medium 3 insbesondere mit den gleichen Dosiereinheiten wie bei den Ausführungsvarianten gemäss Fig. 1 oder 2 über den Verbindungskanal 2 erfolgen. Ferner kann die Distanz x zwischen den beiden Fenstern 21 und 22 über eine auf den seitlichen Wänden des Gefässes 1 und des Behältnisses 20 aufgetragene Skala, die sich in Abhängigkeit der Distanz x gegeneinander verschieben, mit einer Leseeinheit 23 ermittelt werden.

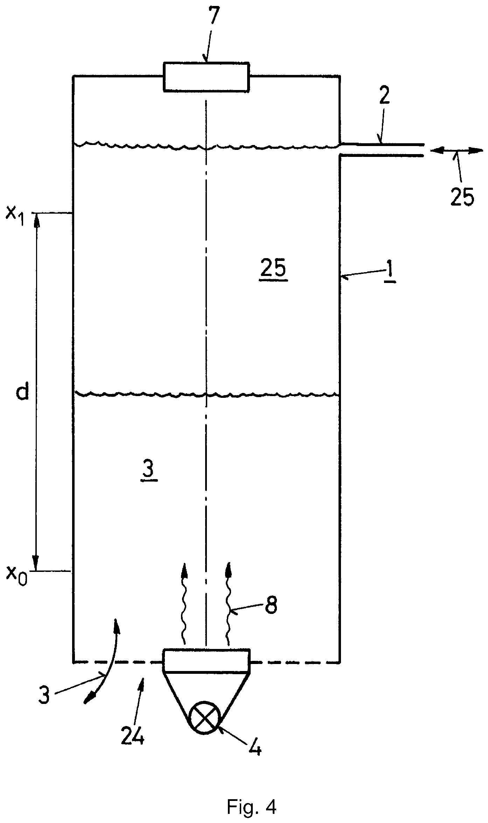

In Fig. 4 ist eine weitere Ausführungsvariante der vorliegenden Erfindung dargestellt, die aufgrund des angewendeten Prinzips auch etwa als Tauchsonde bezeichnet wird. Bei dieser Ausführungsvariante ist das Gefäss 1 umgekehrt angeordnet, so dass die Öffnung 24 des Gefässes 1 in das zu untersuchende flüssige Medium 3 zuerst eintaucht. Damit sich das so eingetauchte Gefäss 1 mit füssigem Medium 3 füllt, wird im Gefäss 1 enthaltene Luft durch Öffnen des Verbindungskanals 2 dosiert abgelassen, womit sich die gewünschten Füllstände im Gefäss 1 einstellen lassen, die zur Durchführung von Absorptionsmessungen im Sinne der noch zu erläuternden Vorgehensweise notwendig sind.

Sind die Absorptionsmessungen für eine Probe abgeschlossen, wird das Gefäss 1 wiederum entleert, indem Luft - beispielsweise aus einem vorhandenen Druckluftsystem, das aus einem unter Druck stehenden Behältnis besteht - durch den Verbindungskanal 2 in das Gefäss 1 gepresst wird, womit das flüssige Medium 3 aus dem Gefäss 1 über die Öffnung 24 verdrängt wird. Sobald das Gefäss 1 vollständig oder nahezu vollständig entleert ist, kann ein neuer Messzyklus gestartet werden.

Wird der Verbindungskanal 2 beabstandet zur Messeinheit 7 angeordnet - wie dies in Fig. 4 gezeigt ist -, bleibt im oberen Bereich des Gefässes 1 ein Luftpolster bestehen und das flüssige Medium 3 kann mit der Messeinheit 7 nicht in Berührung kommen, womit die zum flüssigen Medium 3 gerichtete Oberfläche der Messeinheit 7 nicht oder weniger verschmutzt werden kann.

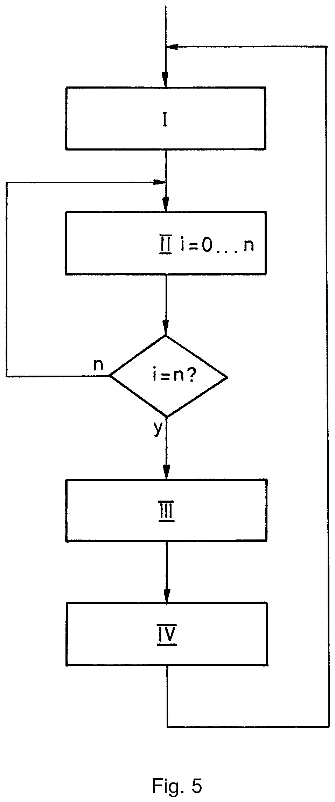

Anhand des in Fig. 5 dargestellten Flussdiagramms wird im Folgenden das erfindungsgemässe Verfahren unter Hinweise auf die in den Fig. 1 bis 4 dargestellten erfindungsgemässen Vorrichtungen erläutert.

In einem Schritt I wird die Fördervorrichtung 13 (Fig. 1 bis 3) durch die Recheneinheit 16 angewiesen, flüssiges Medium 3 mit einer vorgegebenen Fliessgeschwindigkeit in das (leere) Gefäss 1 einzubringen. Bei einem Gefäss 1 mit konstanter Querschnittsfläche und einer konstanten Fliessgeschwindigkeit wird das Gefäss 1 mit konstantem Pegelanstieg gefüllt. Bei der Ausführungsvariante gemäss Fig. 4 wird entsprechend Luft aus dem Gefäss 1 abgelassen, damit der gewünschte Pegelanstieg erhalten wird. Eine alternative Ausführungsvariante - ebenfalls anwendbar in der Variante gemäss Fig. 4 - besteht darin, dass ein gewünschter Pegel durch Einbringen von Luft in das Gefäss 1 erhalten wird. Ein konstanter Luftstrom in das Gefäss 1 führt dabei zu einer Verringerung des Pegels.

In einem Schritt II werden elektromagnetische Wellen 8 mit vorgegebener Wellenlänge $\lambda$ in das im Gefäss 1 enthaltene flüssige Medium 3 eingekoppelt, wobei die elektromagnetischen Wellen 8 im flüssigen Medium 3 eine Wegstrecke zurücklegen, die von einem Füllstand $x_i$ des flüssigen Mediums 3 im Gefäss 1 abhängig ist. Die Intensitäten der empfangenen elektromagnetischen Wellen werden mit der Messeinheit 7 (Fig. 1 bis 4) gemessen.

Die Intensitätsmessung wird mindestens zu einem weiteren Zeitpunkt, d.h. mit erhöhtem Füllstand im Gefäss, wiederholt. Im Flussdiagramm gemäss Fig. 5 wird dies durch die Abfragung des Index i (i=0...n) und durch die Wiederholung des Schrittes II, solange i<n ist. Da n nicht kleiner als 1 ist, werden mindestens zwei Messungen durchgeführt, wobei aufgrund der zeitlichen Differenz zwischen den Messungen diese bei unterschiedlichen Füllständen vorgenommen werden.

Sobald die Messungen abgeschlossen sind (d.h. i=n ist), wird die Stoffkonzentration c bzw. werden Stoffkonzentrationen $c_i$ unter Verwendung der gemessenen Intensitäten $\phi_i$ und der mindestens zwei vorgegebenen Füllständen $x_i$ im Schritt III bestimmt.

Damit kann im Schritt IV das Gefäss 1 wiederum entleert und damit für eine nächste Konzentrationsbestimmung c bereitgemacht werden. Es wird ausdrücklich darauf hingewiesen, dass mit Schritt IV nach der letzten Intensitätsmessung nicht zugewartet werden muss. Insbesondere muss nicht abgewartet werden, bis die Konzentrationsbestimmung gemäss Schritt III abgeschlossen ist. Vielmehr kann unmittelbar nach der letzten Intensitätsmessung unter Schritt II mit dem Entleeren des Gefässes 1 - und damit mit Schritt IV - begonnen werden.

Die erfindungsgemässe Messung von mindestens zwei Intensitäten $\phi_i$ bei mindestens zwei Füllständen $x_i$ des Gefässes 1 hat den grossen Vorteil, dass ein allfälliger Drift des Nullpunktes infolge einer Verschmutzung - beispielsweise der Küvettenbereichs, durch den die elektromagnetischen Wellen in das flüssige Medium eingekoppelt werden - keinen Einfluss auf die Messresultate bzw. auf die zu bestimmende Konzentration c hat.

Die Stoffkonzentration kann - in Anwendung und durch Ableitung des bekannten Gesetzes von Lambert, Beer und Bouguer - nach folgender Formel bestimmt werden:

$$c_i = \frac{\ln \Phi_i(x_i) - \ln \Phi_{i-1}(x_{i-1})}{-2.302 * \varepsilon * (x_i - x_{i-1})}$$

wobei $c_i$ die i-te Stoffkonzentration, $x_i$ der i-te Füllstand, $\Phi_i(x_i)$ eine gemessene i-te Intensität bei einem Füllstand $x_i$ der Index, der ganzzahlig von 1 bis n läuft, und $\varepsilon$ der Extinktionskoeffizient ist, und wobei n einen Wert im Bereich von 1 bis einige 100, vorzugsweise einen Wert im Bereich von 10 bis 100, aufweist.

Demzufolge werden n Intensitäten $\Phi_i$ bei n Füllständen $x_i$ gemessen, wobei die n Füllstände $x_i$ vorzugsweise äquidistant gewählt werden.

Wesentliche Vorteil gegenüber bekannten Lösungen manifestiert sich direkt in der vorstehenden Formel: Die für die Nullpunkt verantwortliche Intensität der von der Quelle 4 stammenden in das flüssige Medium 3 eingekoppelten magnetischen Wellen wird durch die erfindungsgemässe Differenzbildung bzw. durch die Ableitung eliminiert. Aus diesem Grund sind mindestens zwei Messungen mit unterschiedlichem Füllstand $x_i$ im Gefäss notwendig.

Der Zeitpunkt $t_i$ bzw. der Füllstand $x_i$, bei dem eine Intensität $\Phi_i(x_i)$ gemessen wird, kann in unterschiedlicher Weise erfolgen: Erstens besteht die Möglichkeit, mittels Zeitmessung nach Abschluss von Schritt IV eine erste Messung einzuleiten und nach einer weiteren Zeitspanne bzw. nach weiteren Zeitspannen jeweils eine weitere Messung bzw. weitere Messungen vorzunehmen. Da bei Kenntnis der Fliessgeschwindigkeit beim Befüllen des Gefässes und die Form des Gefässes bekannt sind, lässt sich auch der Füllstand $x_i$ ohne weiteres bestimmen. Füllstand $x_i$ und Zeitpunkt $t_i$ sind unter diesen Bedingungen in direkter Beziehung zueinander und bei Kenntnis einer Grösse lässt sich die andere ohne weiteres bestimmen.

Wird n grösser als 1 gewählt, erhält man mehrere Werte für die Konzentration c, nämlich n Werte für die Konzentration, so dass zum Beispiel durch Mittelwertbildung oder mittels linearer Regression, insbesondere mittels einfacher linearer Regression, ein verbessertes Resultat für die Konzentration c erhalten wird.

Das vorstehend erläuterte Verfahren lässt sich in analoger Weise auch zur Bestimmung von Stoffen bzw. Stoffanteilen im flüssigen Medium 3 bestimmen. Die Ausführungen in EP-0 600 334 B1 kommen entsprechend zur Anwendung.

**Patentansprüche**

1. Verfahren zur Bestimmung mindestens einer Stoffkonzentration (c) oder mindestens eines Stoffes in einem flüssigen Medium (3), wobei das Verfahren darin besteht,

   - dass flüssiges Medium (3) mit einer vorgegebenen Fliessgeschwindigkeit in ein Gefäss (1) mit bekannter Form eingebracht wird,
   - dass elektromagnetische Wellen mit vorgegebener Wellenlänge bzw. mit vorgegebenem Wellenlängenbereich in das im Gefäss (1) enthaltene flüssige Medium (3) eingekoppelt werden, wobei die elektromagnetischen Wellen (8) im flüssigen Medium eine Wegstrecke zurücklegen, die von einem Füllstand ($x_i$) des flüssigen Medium (3) im Gefäss (1) abhängig ist,
   - dass Intensitäten ($\Phi_i$) der elektromagnetischen Wellen nach Zurücklegung der Wegstrecke im flüssigen Medium (3) zu mindestens zwei vorgegebenen Zeitpunkten ($t_i$) bzw. bei mindestens zwei vorgegebenen Füllständen ($x_i$) des Gefässes (1) gemessen werden, und
   - dass nach einer letzten Intensitätsmessung die mindestens eine Stoffkonzentration (c) bzw. der mindestens eine Stoff unter Verwendung der gemessenen Intensitäten ($\Phi_i$) und der mindestens zwei vorgegebenen Zeitpunkte ($t_i$) bzw. der mindestens zwei vorgegebenen Füllstände ($x_i$) bestimmt wird.

**2.** Verfahren nach Anspruch 1, weiter die Schritte umfassend,

- dass n Intensitäten ($\Phi_i$) bei n Füllständen ($x_i$) gemessen werden, wobei die n Füllstände ($x_i$) vorzugsweise äquidistant gewählt werden, und
- dass Stoffkonzentrationen nach folgender Formel bestimmt werden:

$$c_i = \frac{\ln \Phi_i(x_i) - \ln \Phi_{i-1}(x_{i-1})}{-2.302 * \varepsilon * (x_i - x_{i-1})}$$

wobei $c_i$ die i-te Stoffkonzentration, $x_i$ der i-te Füllstand, $\Phi_i(x_i)$ eine gemessene i-te Intensität bei einem Füllstand $x_i$, i der Index, der ganzzahlig von 1 bis n läuft, und $\varepsilon$ der Extinktionskoeffizient ist, und wobei n einen Wert im Bereich von 1 bis einige 100, vorzugsweise einen Wert im Bereich von 10 bis 100, aufweist.

**3.** Verfahren nach Anspruch 1 oder 2, weiter die Schritte umfassend,

- dass ein erster Füllstand ($x_0$) detektiert wird, bei dem eine erste Intensität ($\Phi_0$) gemessen wird,
- dass ein letzter Füllstand ($x_n$) detektiert wird, bei dem eine letzte Intensität ($\Phi_n$) gemessen wird,

wobei die Detektion des ersten Füllstandes ($x_0$) und/oder des letzten Füllstandes ($x_n$) vorzugsweise mit einer Lichtschranke erfolgt.

**4.** Verfahren nach Anspruch 2 oder 3, weiter umfassend den Schritt, dass die Stoffkonzentration c entweder durch Mittelwertbildung aus den n Stoffkonzentrationen $c_i$ mit i=1...n oder mittels linearer Regression, insbesondere mittels einfacher linearer Regression, berechnet wird.

**5.** Verfahren nach einem der Ansprüche 1 bis 4, bei dem die Fliessgeschwindigkeit des flüssigen Mediums (3) konstant ist.

**6.** Verfahren nach einem der Ansprüche 1 bis 5, bei dem das Gefäss (1) eine Küvette ist, deren Längsachse im Wesentlichen vertikal verläuft und eine konstante Querschnittsfläche aufweist, wobei die elektromagnetischen Wellen vorzugsweise von unten in die Küvette eingekoppelt werden und die Intensität ($\Phi_i$) vorzugsweise oberhalb der Küvette gemessen wird.

**7.** Verfahren nach einem der Ansprüche 1 bis 6, weiter die Schritte umfassend, dass

- das Gefäss (1) nach der letzten Intensitätsmessung automatisch entleert wird und
- dass nach erfolgter Entleerung das Gefäss (1) für einen neuen Messzyklus automatisch mit neuem flüssigem Medium (3) gefüllt wird.

**8.** Verfahren nach einem der Ansprüche 1 bis 7, weiter den Schritt umfassend, dass die Füllstände ($x_i$) über eine Zeitmessung ermittelt werden.

**9.** Verfahren nach einem der Ansprüche 1 bis 8, bei dem die elektromagnetischen Wellen eine Wellenlänge von 254nm oder 550nm aufweisen.

**10.** Vorrichtung zur Bestimmung mindestens einer Stoffkonzentration (c) bzw. mindestens eines Stoffes in einem flüssigen Medium (3), wobei die Vorrichtung umfasst:

- ein Gefäss (1) mit bekannter Form,
- eine Quelle (4) zur Erzeugung von elektromagnetischen Wellen (),
- eine Messeinheit (7) zur Messung von elektromagnetischen Wellen und
- eine Fördereinrichtung (13), die über einen Verbindungskanal (2) mit dem Gefäss (1) verbunden ist, **dadurch gekennzeichnet,**
- **dass** die Quelle (4) elektromagnetische Wellen in das Gefäss (1) abgeben kann, so dass die elektromagnetischen Wellen im flüssigen Medium (3) eine Wegstrecke zurücklegen, die von einem Füllstand ($x_i$) des flüssigen Mediums (3) im Gefäss (1) abhängig ist,
- **dass** die Messeinheit (7) zum Messen von Intensitäten der elektromagnetischen Wellen nach Zurücklegung der Wegstrecke im flüssigen Medium (3) zu mindestens zwei vorgegebenen Zeitpunkten ($t_0$, $t_n$) bzw. bei mindestens zwei vorgegebenen Füllständen ($x_0$, $x_n$) des Gefässes (1) ausgelegt sind und
- **dass** eine Recheneinheit (16) mit der Quelle (4), der Messeinheit (7) und der Fördereinrichtung (13) operationell verbunden ist, wobei die Recheneinheit (16) zur Bestimmung der mindestens einen Stoffkonzentration (c) bzw. des mindestens einen Stoffes aufgrund der gemessenen Intensitäten und der mindestens zwei vorgegebenen Zeitpunkte ($t_i$) bzw. der mindestens zwei vorgegebenen Füllstände ($x_i$) ausgelegt ist.

**11.** Vorrichtung nach Anspruch 10, **dadurch gekennzeichnet,**

- **dass** die Messeinheit (7) zum Messen von n Intensitäten ($\Phi_i$) bei n Füllständen ($x_i$) ausgelegt ist, wobei die n Füllstände ($x_i$) vorzugsweise äquidistant gewählt werden, und

- **dass** die Recheneinheit (16) zur Bestimmung der Stoffkonzentrationen nach folgender Formel ausgelegt ist:

$$c_i = \frac{\ln \Phi_i(x_i) - \ln \Phi_{i-1}(x_{i-1})}{-2.302 * \varepsilon * (x_i - x_{i-1})}$$

wobei $c_i$ die i-te Stoffkonzentration, $x_i$ der i-te Füllstand, $\Phi_i(x_i)$ eine gemessene i-te Intensität bei einem Füllstand $x_i$, i der Index, der ganzzahlig von 1 bis n läuft, und $\varepsilon$ der Extinktionskoeffizient ist, und wobei n einen Wert im Bereich 1 bis einige 100, vorzugsweise einen Wert im Bereich von 10 bis 100, aufweist.

12. Vorrichtung nach Anspruch 10 oder 11, weiter dazu ausgelegt,

- einen ersten Füllstand $(x_0)$ zu detektieren und dabei eine erste Intensität $(\Phi_0)$ zu messen,
- einen letzten Füllstand $(x_n)$ zu detektieren und dabei eine letzte Intensität $(\Phi_n)$ zu messen,

wobei zur Detektion des ersten Füllstandes $(x_0)$ und/oder des letzten Füllstandes $(x_n)$ vorzugsweise eine erste Lichtschranke (LS1) resp. eine zweite Lichtschranke (LS2) vorhanden ist.

13. Vorrichtung nach einem der Ansprüche 10 bis 12, **dadurch gekennzeichnet, dass** die Recheneinheit (16) dazu ausgelegt ist, die Stoffkonzentration c in der Recheneinheit (16) entweder durch Mittelwertbildung aus den n Stoffkonzentrationen $c_i$ mit i=1...n oder mittels linearer Regression, insbesondere mittels einfacher linearer Regression, zu berechnen.

14. Vorrichtung nach einem der Ansprüche 10 bis 13, **dadurch gekennzeichnet, dass** eine Fördervorrichtung (13) vorgesehen ist, die mit dem Verbindungskanal (2) wirkverbunden ist, wobei die Fördereinrichtung (13) dazu ausgelegt ist, das flüssige Medium (3) vorzugsweise mit konstanter Fliessgeschwindigkeit in das Gefäss (1) zu fördern.

15. Vorrichtung nach einem der Ansprüche 10 bis 14, **dadurch gekennzeichnet, dass** die Fördereinrichtung (13) zum Befüllen und zum Entleeren des Gefässes (1) ein automatisch betätigbares Umschaltventil umfasst.

16. Vorrichtung nach einem der Ansprüche 10 bis 14, **dadurch gekennzeichnet, dass** das Gefäss (1) eine Küvette ist, deren Längsachse im Wesentlichen vertikal verläuft und eine konstante Querschnittsfläche aufweist, wobei die elektromagnetischen Wellen vorzugsweise von unten in die Küvette (1) eingekoppelt werden und die Intensität $(\Phi_i)$ vorzugsweise oberhalb der Küvette (1) gemessen wird.

17. Vorrichtung nach einem der Ansprüche 10 bis 13, **dadurch gekennzeichnet, dass** das Gefäss (1) umgekehrt im Sinne einer Tauchsonde angeordnet ist, wobei ein Füllstand $(x_i)$ im Gefäss (1) mittels Luftverdrängung einstellbar ist.

18. Vorrichtung nach einem der Ansprüche 10 bis 17, **dadurch gekennzeichnet, dass** die Quelle (4) dazu ausgelegt ist, elektromagnetische Wellen mit Wellenlängen von 254nm und 550nm zu erzeugen.

19. Vorrichtung nach einem der Ansprüche 10 bis 18, **dadurch gekennzeichnet, dass** mit dem Gefäss (1) ein Schaurohr (12) kommunizierend verbunden ist, über das mindestens der erste Füllstand $(x_0)$ und der letzte Füllstand $(x_n)$ bestimmbar sind.

**Claims**

1. A method for determining at least one substance concentration (c) or at least one substance in a liquid medium (3), wherein the method consists of the following steps,

- liquid medium (3) is introduced at a predefined flow speed into a vessel (1) having a known shape,
- electromagnetic waves having predefined wavelength or having predefined wavelength range are coupled into the liquid medium (3) contained in the vessel (1), wherein the electromagnetic waves (8) cover a path length in the liquid medium which is dependent on a fill level $(x_i)$ of the liquid medium (3) in the vessel (1),
- intensities $(\Phi_i)$ of the electromagnetic waves are measured after covering the path length in the liquid medium (3) at at least two predefined points in time $(t_i)$ and/or at at least two predefined fill levels $(x_i)$ of the vessel (1), and
- after a last intensity measurement, the at least one substance concentration (c) or the at least one substance is determined using the measured intensities $(\Phi_i)$ and the at least two predefined points in time $(t_i)$ or the at least two predefined fill levels $(x_i)$, respectively.

2. The method according to Claim 1, furthermore comprising the following steps,

- n intensities $(\Phi_i)$ are measured at n fill levels $(x_i)$, wherein the n fill levels $(x_i)$ are preferably selected as equidistant, and
- substance concentrations are determined according to the following formula:

$$c_i = \frac{\ln \Phi_i(x_i) - \ln \Phi_{i-1}(x_{i-1})}{-2.302 * \varepsilon * (x_i - x_{i-1})}$$

wherein $c_i$ is the i-th substance concentration, $x_i$ is the i-th fill level, $\Phi_i(x_i)$ is a measured i-th intensity at a fill level $x_i$, i is the index, which extends in integers from 1 to n, and $\varepsilon$ is the coefficient of extinction, and wherein n has a value in the range of 1 to several hundred, preferably a value in the range of 10 to 100.

3. The method according to Claim 1 or 2, furthermore comprising the following steps,

    - a first fill level ($x_0$) is detected, at which a first intensity ($\Phi_0$) is measured,
    - a last fill level ($x_n$) is detected, at which a last intensity ($\Phi_n$) is measured,

wherein the detection of the first level ($x_0$) and/or the last fill level ($x_n$) is preferably performed using a light barrier.

4. The method according to Claim 2 or 3, furthermore comprising the step that the substance concentration c is computed either by averaging from n substance concentrations $c_i$ where i = 1...n or by means of linear regression, in particular by means of simple linear regression.

5. The method according to any one of Claims 1 to 4, wherein the flow speed of the liquid medium (3) is constant.

6. The method according to any one of Claims 1 to 5, wherein the vessel (1) is a cuvette, the longitudinal axis of which extends essentially vertically, and which has a constant cross-sectional area, wherein the electromagnetic waves are preferably coupled from below into the cuvette and the intensity ($\Phi_i$) is preferably measured above the cuvette.

7. The method according to any one of Claims 1 to 6, furthermore comprising the steps that

    - the vessel (1) is automatically emptied after the last intensity measurement and
    - after completed emptying, the vessel (1) is automatically filled with new liquid medium (3) for a new measuring cycle.

8. The method according to any one of Claims 1 to 7, furthermore comprising the step that the fill levels ($x_i$) are ascertained via a time measurement.

9. The method according to any one of Claims 1 to 8, wherein the electromagnetic waves have a wavelength of 254 nm or 550 nm.

10. A device for determining at least one substance concentration (c) or at least one substance in a liquid medium (3), wherein the device comprises:

    - a vessel (1) having a known shape,
    - a source (4) for generating electromagnetic waves (8),
    - a measuring unit (7) for measuring electromagnetic waves, and
    - a conveyor unit (13) that is connected to the vessel (1) via a connecting channel (2),

**characterized in that**

    - the source (4) can emit electromagnetic waves into the vessel (1), so that the electromagnetic waves cover a path length in the liquid medium (3) which is dependent on a fill level ($x_i$) of the liquid medium (3) in the vessel (1),
    - the measuring unit (7) is adapted for measuring intensities of the electromagnetic waves after covering the path length in the liquid medium (3) at at least two predefined points in time ($t_0$, $t_n$) and/or at at least two predefined fill levels ($x_0$, $x_n$) of the vessel (1), and
    - a computer unit (16) is operationally connected to the source (4), the measuring unit (7) and the conveyor device (13), the computer unit (16) being adapted for determining of the at least one substance concentration (c) or the at least one substance on the basis of the measured intensities and the at least two predefined points in time ($t_i$) or the at least two predefined fill levels ($x_i$), respectively.

11. The device according to Claim 10, **characterized in that**

    - the measuring unit (7) is adapted for measuring n intensities ($\Phi_i$) at n fill levels ($x_i$), wherein the n fill levels ($x_i$) are preferably selected as equidistant, and
    - the computer unit (16) is adapted for determining substance concentrations according to the following formula:

$$c_i = \frac{\ln \Phi_i(x_i) - \ln \Phi_{i-1}(x_{i-1})}{-2.302 * \varepsilon * (x_i - x_{i-1})}$$

wherein $c_i$ is the i-th substance concentration, $x_i$ is the i-th fill level, $\Phi_i(x_i)$ is a measured i-th intensity at a fill level $x_i$, i is the index, which extends in integers from 1 to n, and $\varepsilon$ is the coefficient of extinction, and wherein n has a value in the range of 1 to several hundred, preferably a value in the range of 10 to 100.

12. The device according to Claim 10 or 11, further adapted for

    - detecting a first fill level ($x_0$), at which a first intensity ($\Phi_0$) is measured,
    - detecting a last fill level ($x_n$), at which a last intensity ($\Phi_n$) is measured,

    wherein preferably a first light barrier (LS1) or a second light barrier (LS2) is respectively provided for detecting the first fill level ($x_0$) and/or the last fill level ($x_n$).

13. The device according to any one of Claims 10 to 12, **characterized in that** the computer unit (16) is adapted for computing the substance concentration c either by averaging from the n substance concentrations $c_i$ where i = 1...n or by means of linear regression, in particular by means of simple linear regression.

14. The device according to any one of Claims 10 to 13, **characterized in that** a conveyor device (13) is provided, which is operationally connected to the connecting channel (2), wherein the conveyor device (13) is adapted for conveying the liquid medium (3), preferably at constant flow speed, into the vessel (1).

15. The device according to any one of Claims 10 to 14, **characterized in that** the conveyor device (13) for filling and emptying the vessel (1) comprises an automatically actuable switching valve.

16. The device according to any one of Claims 10 to 14, **characterized in that** the vessel (1) is a cuvette, the longitudinal axis of which extends essentially vertically, and which has a constant cross-sectional area, wherein the electromagnetic waves are preferably coupled from below into the cuvette (1) and the intensity ($\Phi_i$) is preferably measured above the cuvette (1).

17. The device according to any one of Claims 10 to 13, **characterized in that** the vessel (1) is arranged inverted in the sense of an immersion probe, wherein a fill level ($x_i$) in the vessel (1) is settable by means of air displacement.

18. The device according to any one of Claims 10 to 17, **characterized in that** the source (4) is adapted for generating electromagnetic waves having wavelengths of 254 nm and 550 nm.

19. The device according to any one of Claims 10 to 18, **characterized in that** a viewing tube (12) has a communicative connection to the vessel (1), via which at least the first fill level ($x_0$) and the last fill level ($x_n$) are determinable.

## Revendications

1. Procédé pour déterminer au moins une concentration de substance (c) ou au moins une substance dans un fluide liquide (3), le procédé consistant à :

    - amener le fluide liquide (3) à une vitesse d'écoulement prédéterminée dans un récipient (1) de forme connue,
    - injecter dans le fluide liquide (3) contenu dans le récipient (1) des ondes électromagnétiques avec une longueur d'onde prédéterminée ou avec une plage de longueur d'onde prédéterminée, les ondes électromagnétiques (8) dans le fluide liquide parcourant une distance qui dépend du niveau de remplissage ($x_i$) du fluide liquide (3) dans le récipient (1),
    - mesurer les intensités ($\phi_i$) des ondes électromagnétiques après parcours de la distance dans le fluide liquide (3) à au moins deux moments prédéterminés ($t_i$) et à au moins deux niveaux de remplissage prédéterminés ($x_i$) du récipient (1), et
    - déterminer, après une dernière mesure d'intensité, la au moins une concentration de substance (c) ou la au moins une substance en utilisant les intensités mesurées ($\phi_i$) et les au moins deux moments prédéterminés ($t_i$) ou les au moins deux niveaux de remplissage ($x_i$) prédéterminés.

2. Procédé selon la revendication 1, comprenant en outre les étapes consistant à :

    - mesurer n intensités ($\phi_i$) à n niveaux de remplissage ($x_i$), les n niveaux de remplissage ($x_i$) étant de préférence choisis équidistants, et
    - déterminer les concentrations de substance suivant la formule suivante :

$$c_i = \frac{\ln \Phi_i(x_i) - \ln \Phi_{i-1}(x_{i-1})}{-2.302 * \varepsilon * (x_i - x_{i-1})}$$

    où $c_i$ est la n-ième concentration de substance, $x_i$ le n-ième niveau de remplissage, $\phi_i(x_i)$ une n-ième intensité mesurée à un niveau de remplissage $x_i$, i étant l'indice et étant un nombre entier allant de 1 à n, et $\varepsilon$ étant le coefficient d'extinction, et dans lequel n présente une valeur dans la plage allant de 1 à quelques centaines, de préférence une valeur dans la plage allant de 10 à 100.

**3.** Procédé selon la revendication 1 ou 2, comprenant en outre les étapes consistant à :

- détecter un premier niveau de remplissage ($x_0$), dans lequel on mesure une première intensité ($\phi_0$),
- détecter un dernier niveau de remplissage ($x_n$) dans lequel on mesure une dernière intensité ($\phi_n$),

la détection du premier niveau de remplissage ($x_0$) et/ou du dernier niveau de remplissage ($x_n$) se faisant de préférence avec une barrière lumineuse.

**4.** Procédé selon la revendication 2 ou 3, comprenant en outre l'étape consistant à calculer la concentration de substance c, soit en faisant la moyenne des concentrations de substance $c_i$ avec i = 1....n, soit par le biais d'une régression linéaire, en particulier par le biais d'une régression linéaire simple.

**5.** Procédé selon l'une des revendications 1 à 4, dans lequel la vitesse d'écoulement du fluide liquide (3) est constante.

**6.** Procédé selon l'une des revendications 1 à 5, dans lequel le récipient (1) est une cuvette dont l'axe longitudinal s'étend essentiellement verticalement et présente une section transversale constante, les ondes électromagnétiques étant injectées de préférence dans la cuvette par en-dessous et l'intensité ($\phi_i$) étant de préférence mesurée au-dessus de la cuvette.

**7.** Procédé selon l'une des revendications 1 à 6, comprenant en outre les étapes consistant à :

- vider automatiquement le récipient (1) après la dernière mesure d'intensité, et
- après avoir vidé le récipient (1), le remplir automatiquement avec un nouveau fluide liquide (3) pour un nouveau cycle de mesure.

**8.** Procédé selon l'une des revendications 1 à 7, comprenant en outre l'étape consistant à déterminer les niveaux de remplissage ($x_i$) par un chronométrage.

**9.** Procédé selon l'une des revendications 1 à 8, dans lequel les ondes électromagnétiques présentent une longueur d'onde de 254 nm ou 550 nm.

**10.** Dispositif pour déterminer au moins une concentration de substance (c) ou au moins une substance dans un fluide liquide (3), le dispositif comprenant :

- un récipient (1) de forme connue,
- une source (4) pour produire des ondes électromagnétiques,

- une unité de mesure (7) pour mesurer les ondes électromagnétiques, et
- un système de convoyage (13) qui est relié au récipient (1) par un canal de liaison (2),

**caractérisé en ce que** :

- la source (4) peut émettre des ondes électromagnétiques dans le récipient (1), de sorte que les ondes électromagnétiques parcourent une distance dans le fluide liquide (3) qui dépend du niveau de remplissage ($x_i$) du fluide liquide (3) dans le récipient (1),
- l'unité de mesure (7) est conçue pour mesurer les intensités des ondes électromagnétiques après parcours de la distance dans le fluide liquide (3) à au moins deux moments prédéterminés ($t_0$, $t_n$) ou à au moins deux niveaux de remplissage prédéterminés ($x_0$, $x_n$) du récipient (1), et
- une unité de calcul (16) est raccordée de façon fonctionnelle à la source (4), à l'unité de mesure (7) et au dispositif de convoyage (13), l'unité de calcul (16) étant conçue pour déterminer la au moins une concentration de substance (c) ou la au moins une substance sur la base des intensités mesurées et des au moins deux moments prédéterminés ($t_i$) ou des au moins deux niveaux de remplissage prédéterminés ($x_i$).

**11.** Dispositif selon la revendication 10, **caractérisé en ce que** :

- l'unité de mesure (7) est conçue pour mesurer les n intensités ($\phi_i$) aux n niveaux de remplissage ($x_i$),
les n niveaux de remplissage ($x_i$) étant choisis de préférence équidistants, et
- l'unité de calcul (16) est conçue pour déterminer les concentrations de substance suivant la formule suivante :

$$c_i = \frac{\ln \Phi_i(x_i) - \ln \Phi_{i-1}(x_{i-1})}{-2.302 * \varepsilon * (x_i - x_{i-1})}$$

où $c_i$ est la n-ième concentration de substance, $x_i$ est la n-ième niveau de remplissage, $\phi_i(x_i)$ est une n-ième intensité mesurée à un niveau de remplissage $x_i$, i étant l'indice et étant un nombre entier allant de 1 à n, et $\varepsilon$ étant le coefficient d'extinction, et dans lequel n présente une valeur dans la plage allant de 1 à quelques centaines, de préférence une valeur dans la plage allant de 10 à 100.

**12.** Dispositif selon la revendication 10 ou 11, conçu en outre pour :

- détecter un premier niveau de remplissage ($x_0$) et mesurer une première intensité ($\phi_0$),
- détecter un dernier niveau de remplissage ($x_n$) et mesurer une dernière intensité ($\phi_n$),

dans lequel pour la détection du premier niveau de remplissage ($x_0$) et/ou du dernier niveau de remplissage ($x_n$) on utilise de préférence une première barrière lumineuse (LS1), respectivement une deuxième barrière lumineuse (LS2).

13. Dispositif selon l'une des revendications 10 à 12, **caractérisé en ce que** l'unité de calcul (16) est conçue pour calculer la concentration de substance c dans l'unité de calcul soit en faisant la moyenne des n concentrations de substance $c_i$ avec i=1...n, soit par le biais d'une régression linéaire, en particulier par le biais d'une régression linéaire simple.

14. Dispositif selon l'une des revendications 10 à 13, **caractérisé en ce qu'**il est prévu un dispositif de convoyage (13) qui est en liaison active avec le canal de liaison (2), le dispositif de convoyage (13) étant conçu pour amener le fluide liquide (3) dans le récipient (3) de préférence à une vitesse d'écoulement constante.

15. Dispositif selon l'une des revendications 10 à 14, **caractérisé en ce que** le dispositif de convoyage (13) comprend une vanne de commutation à actionnement automatique pour remplir et vider le récipient (1).

16. Dispositif selon l'une des revendications 10 à 14, **caractérisé en ce que** le récipient (1) est une cuvette dont l'axe longitudinal s'étend essentiellement verticalement et qui présente une section transversale constante, les ondes électromagnétiques étant de préférence injectées dans la cuvette (1) par en-dessous et l'intensité ($\phi_i$) étant de préférence mesurée au-dessus de la cuvette (1)

17. Dispositif selon l'une des revendications 10 à 13, **caractérisé en ce que** le récipient (1) est agencé inversé au sens d'une sonde à immersion, un niveau de remplissage ($x_i$) dans le récipient (1) pouvant être réglé par déplacement d'air.

18. Dispositif selon l'une des revendications 10 à 17, **caractérisé en ce que** la source (4) est conçue pour produire des ondes électromagnétiques avec des longueurs d'onde de 254 nm et 550 nm.

19. Dispositif selon l'une des revendications 10 à 18, **caractérisé en ce qu'**un tube (12) est raccordé de façon communicante avec le récipient (1), par lequel il est possible de déterminer le au moins un premier niveau de remplissage ($x_0$) et le dernier niveau de remplissage ($x_n$).

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0600334 B1